Europäisches Patentamt

European Patent Office

Office européen des brevets

(11) Veröffentlichungsnummer: **0 171 075**
**A2**

(12) **EUROPÄISCHE PATENTANMELDUNG**

(21) Anmeldenummer: **85109930.9**

(22) Anmeldetag: **07.08.85**

(51) Int. Cl.⁴: **H 01 H 9/16, H 01 H 13/68**

(30) Priorität: **10.08.84 DE 8423758 U**

(43) Veröffentlichungstag der Anmeldung: **12.02.86**
**Patentblatt 86/7**

(84) Benannte Vertragsstaaten: **CH DE FR GB LI**

(71) Anmelder: **International Standard Electric Corporation, 320 Park Avenue, New York New York 10022 (US)**

(84) Benannte Vertragsstaaten: **CH FR GB LI**

(71) Anmelder: **Standard Elektrik Lorenz Aktiengesellschaft, Lorenzstrasse 10, D-7000 Stuttgart 40 (DE)**

(84) Benannte Vertragsstaaten: **DE**

(72) Erfinder: **Oesterle, Hermann Friedrich, Hans-Sachs-Strasse 30, D-8560 Lauf (DE)**

(74) Vertreter: **Hösch, Günther, Dipl.-Ing. et al, c/o Standard Elektrik Lorenz AG Patent- und Lizenzwesen Kurze Strasse 8 Postfach 300 929, D-7000 Stuttgart 30 (DE)**

(54) **Tastschalter mit Schrittschaltwerk.**

(57) Bei einem Tastschalter mit zwei Tasten und mit diesen in Wirkverbindung stehenden Tastenschiebern, an denen je ein Mitnehmer angebracht ist, der ein Stirnzahnrad betätigen kann, das durch wenigstens ein Rastelement in Rastschritten verstellbar ist und über das eine Anzeigescheibe und eine Kontaktanordnung verstellbar ist, sind erfindungsgemäss die Tasten mit einem durchgehenden Längskanal mit gleichem oder zumindest bis zur Betätigungsfläche hin sich über einen längeren Längsabschnitt erstreckenden gleichen Querschnitt versehen und dieser Längskanal ist mit einem Steck-, Spritz- oder Giessteil aus vom Tastenmaterial unterschiedlichem Material ausgefüllt.

- 1 -

H.F.Oesterle 5

Tastschalter mit Schrittschaltwerk

Die vorliegende Erfindung bezieht sich auf einen Tastschalter mit einem Schrittschaltwerk gemäß dem Oberbegriff des Anspruchs 1.

Bei derartigen Tastschaltern ist an der Betätigungsfläche der Tasten eine Anzeige in Form eines Aufdruckes
oder einer ausgefüllten oder nicht ausgefüllten Vertiefung geringer Tiefe vorgesehen. Derartige Anzeigen unterliegen bei oftmaliger Betätigung einem Verschleiß, so
daß sie, insbesondere in Geräten, die in Werkstätten
aufgestellt sind, relativ schnell ihre Funktion nicht
mehr ausführen können.

Mit der vorliegenden Erfindung soll die Aufgabe gelöst
werden, die Tasten so auszugestalten, daß auch bei starker
Abnutzung der Tastenoberfläche die Anzeige gut sichtbar
bleibt.

Gelöst wird diese Aufgabe durch die im Kennzeichen des
Anspruchs 1 angegebenen Merkmale. Durch den durchgehenden Längskanal in der Taste und die Ausfüllung derselben
mit dem unterschiedlichen Material wird auch bei starker
Abnutzung der Betätigungsfläche die Anzeige immer sichtbar bleiben.

Weitere vorteilhafte Einzelheiten der Erfindung sind
in den Unteransprüchen angegeben und nachfolgend anhand eines in der Zeichnung veranschaulichten Ausführungsbeispiels beschrieben.

- 2 -

H.F.Oesterle 5

Es zeigen:

Fig. 1 einen Tastschalter bei abgenommener Gehäuseseitenwand,

Fig. 2 die Tasten von der Stirnseite,

Fig. 3 eine Taste mit einem durchgehenden gleichförmigen
Querschnitt in nicht ausgefülltem Zustand,

Fig. 4 die Taste der Fig. 3 im ausgefüllten Zustand und

Fig. 5 eine Taste mit einem abschnittsweise gleichförmigen Querschnitt.

Mit 1 ist ein Gehäuse eines Tastschalter, z.B. eines Impulsgebers oder Codierschalters etc. bezeichnet. In zwei oberen seitlichen Führungsöffnungen 2 sind durch Drücken betätigbare Tasten 3 und 4 verschiebbar gehaltert. An den Tasten 3, 4 ist je ein Tastenstößel 5 bzw. 6 befestigt oder angeformt, die im Gehäuse 1 in geeigneter Weise ggf. zusätzlich mittels Führungsbolzen 7 in Druckrichtung, d.h. in Richtung der Längsachse L verschiebbar gehaltert sind. An den in der Zeichnung unteren Enden 8, 9 der Tastenstößel 5, 6 sind diese durch einen federnden Quersteg 10 miteinander verbunden, d.h. die Tastenstößel 5, 6 und der Quersteg 10 bilden eine bauliche Einheit. Der Quersteg 10 erzeugt dabei die Rückstellkraft für die Tastenstößel 5 und 6.

Der Quersteg 10 ist im Gehäuse durch ein beispielsweise aus einem Ausschnitt 11 des Gehäuses 1 und einem Ansatz 12

H.F.Oesterle 5

des Quersteges 10 gebildetes Schneidenlager lagefixiert und federnd vorgespannt, wobei Anschläge 13 der Tastenstößel 5, 6 von innen gegen die obere Gehäusestirnwand 14 drücken.

Oben am Tastenstößel 5, 6 ist je ein Arm 15 bzw. 16 angeformt. Diese verlaufen etwa parallel zum Tastenstößel 5 bzw. 6 und sind um eine fiktive Schwenkachse 17 bzw. 18 zu den Tastenstößeln 5 bzw. 6 hin seitlich federnd auslenkbar. Zwischen den Armen 15 und 16 ist ein um eine Achse 19 drehbares, als Schrittschaltwerk wirkendes Stirnzahnrad 20 drehbar angeordnet. Jeder Arm 15, 16 besitzt einen Mitnehmer 21 bzw. 22, der beim Betätigen der zugeordneten Taste 3 bzw. 4 mit einem Zahn Z9 bzw. Z2 des Stirnzahnrads 20 zusammenwirkt und letzteres um einen Zahn weiterschalten kann.

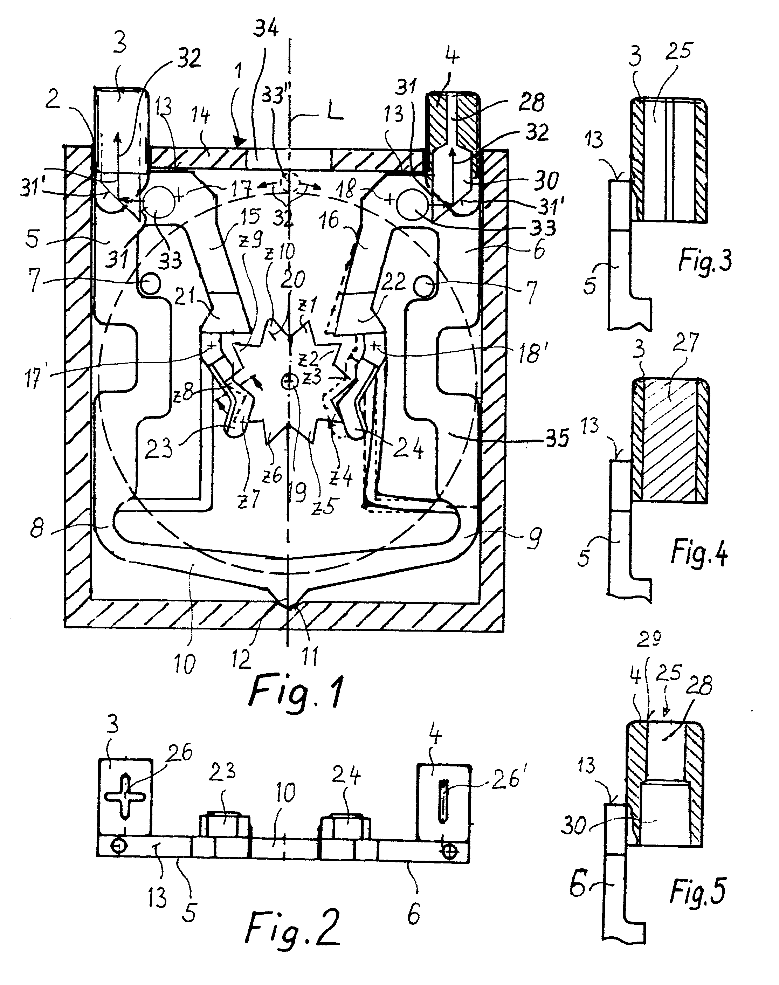

In Verlängerung der Mitnehmer 2, 22 oder in sonst geeigneter Weise ist am Tastenstößel 5, 6 je ein Rastelement 23 bzw. 24 so angebracht, daß dieses seitlich federnd auslenkbar ist und in die erste Zahnlücke unterhalb der Drehachse 19 zwischen den Zaähnen Z7 und Z8 bzw. Z3 und Z4 des Stirnzahnrads 20 einrasten kann und damit die Raststellung desselben fixieren. Hierbei wird der Arm 15 bzw. 16 und im Ausführungsbeispiel auch das Rastelement 23 bzw. 24 um die fiktive Schwenkachse 17 bzw. 18 und/oder 17' bzw. 18' federnd nach außen ausgelenkt, wie anhand der rechten Zeichnungshälfte in Fig. 1 dargestellt ist. In der linken Zeichnungshälfte ist das Rastelement 23 in nicht gerastetem, also entspanntem Zustand dargestellt.

H.F.Oesterle 5

Erfindungsgemäß ist in den Tasten 3, 4 ein durchgehender Längskanal 25 vorgesehen, der gemäß Fig. 3 über die ganze Länge gleichen Querschnitt in Form einer Anzeige 26 oder 26', beispielsweise gemäß Fig. 2 in Form eines Balkenkreuzes 26 bzw. eines Balkens oder langgestreckten Rechtecks 26' aufweist. Der Längskanal 25 ist, wie im Schnitt der Fig. 4 gezeigt, mit einem gegenüber dem Material der Taste 3, 4, beispielsweise ein Kunststoff aus elastischem Material, unterschiedlichem Material z.B. einem Steck-, Gieß- oder Spritzkörper 27 ausgefüllt. Letzterer ist beispielsweise aus härterem oder weicherem Material als das der Taste 3, 4 und/oder aus einem Material mit für Licht unterschiedlichem Brechungsindex oder Lichtreflexions- oder Lichtabsorptionsverhalten, ggf. gegenüber nur bestimmten Lichtwellenlängen.

Der durchgehende Längskanal 25 kann auch gemäß Fig. 5 über einen Längsabschnitt 28, der sich von innen aus bis zur Betätigungsoberfläche 29 der Taste 3 bzw. 4 erstreckt, in der gewünschten Querschnittsform ausgeführt sein und im Rest 30 einen größeren Querschnitt aufweisen. Der Längsabschnitt 28 sollte aber wenigstens etwa 2 bis 3 mm betragen.

Gemäß einer vorteilhaften Weiterbildung der Erfindung ist das den Längskanal 25 ausfüllende Teil 27 mit einer Einstrahlfläche 31 und/oder einer Reflexionsfläche 31' für die Einstrahlung eines Lichtstrahls 32 einer Lichtquelle 33 versehen und das Teil 27 besteht aus einem für Licht durchlässigen durchsichtigen oder zumindest durchscheinenden

H.F.Oesterle 5

Material. Das Teil 27 wirkt in diesem Fall als Lichtleiter. Zweckmäßig ist die Einstrahl- und/oder Reflexionsfläche 31 bzw. 31' und der Lichtstrahl 32 so vorgesehen, daß eine Einstrahlung zumindest in der Ruhelage der Tasten 3, 4 möglich ist. Zweckmäßig ist die Lichtquelle in der Zeichnung oben zwischen den Tastenstößeln 5, 6 neben den Einstrahlflächen 31 oder in der Mitte, z.B. in der nicht dargestellten Rückwand angebracht. Die Lichtquelle 33' kann vorteilhaft zugleich zur Beleuchtung der im Sichtfenster 34 sichtbaren Skala des Skalenrades 35 verwendet werden.

H.F.Oesterle 5

Schutzansprüche

1. Tastschalter mit zwei Tasten und mit diesen in Wirk-verbindung stehenden Tastenschiebern, an denen je ein Mitnehmer angebracht ist, der ein Stirnzahnrad betätigen kann, das durch wenigstens ein Rastelement in Rastschrit-ten verstellbar ist und über das eine Anzeigescheibe und eine Kontaktanordnung verstellbar ist, d a d u r c h g e k e n n z e i c h n e t , daß die Tasten (3, 4) mit einem durchgehenden Längskanal (25) mit gleichem oder zumindest bis zur Betätigungsfläche (29) hin sich über einen längeren Längsabschnitt (28) erstreckenden gleichen Querschnitt versehen sind und dieser Längskanal (25) mit einem Steck-, Spritz- oder Gießteil (27) aus vom Tasten-material unterschiedlichem Material ausgefüllt ist.

2. Tastschalter nach Anspruch 1, dadurch gekennzeichnet, daß der Längskanal (25) der einen Taste (4) im Querschnitt als langgestrecktes Rechteck (26') und derjenige der anderen Taste (3) im Querschnitt als Balkenkreuz (26) ausgebildet ist.

3. Tastschalter nach Anspruch 1 oder 2, dadurch gekennzeichnet, daß das den Längskanal (25) ausfüllende Teil (27) aus einem Material besteht, das härter ist als das Material der Tasten (3, 4).

ZT/P21-Hs/ki
27.7.1984

H.F.Oesterle 5

4. Tastschalter nach Anspruch 1 oder 2, dadurch gekennzeichnet, daß das den Längskanal (25) aufüllende Teil (27) aus einem .Material besteht, das weicher ist als das Material der Tasten (3, 4).

5. Tastschalter nach einem der Ansprüche 1 bis 4, dadurch gekennzeichnet, daß das ausfüllende Teil (27) aus einem Material besteht, das eine vom Material der Tasten (3, 4) unterschiedliche Lichtreflexion und/oder Lichtabsorption besitzt.

6. Tastschalter nach einem der Ansprüche 1 bis 5, dadurch gekennzeichnet, daß das ausfüllende Teil (27) aus einem durchsichtigen oder durchscheinenden Material besteht und innen eine Einstrahlfläche (31) und/oder Reflexionsfläche (31') für von einer Lichtquelle (33) eingestrahltes Licht aufweist.

7. Tastschalter nach Anspruch 6, dadurch gekennzeichnet, daß die Einstrahlfläche (31) und/oder Reflexionsfläche (31') in Ruhestellung der Taste (3, 4) im Lichtstrahl (32) der Lichtquelle (33) liegt.

8. Tastschalter nach Anspruch 6 oder 7, dadurch gekennzeichnet, daß die Lichtquelle (33) zugleich zur Beleuchtung des Skalenrades (35) dient.

Fig. 1

Fig. 2

Fig. 3

Fig. 4

Fig. 5